# FASCICULE DE BREVET EUROPEEN

(11) **EP 3 117 499 B1**
(45) Date de publication et mention de la délivrance du brevet: **24.11.2021**
(21) Numéro de dépôt: 15717014.3
(22) Date de dépôt: 10.03.2015
(51) Int. Cl.: H02J 3/14, H02J 3/00, H02J 4/00, H05K 5/02

(54) **DISPOSITIF DE GESTION DE CONSOMMATION ELECTRIQUE**
VORRICHTUNG ZUR VERWALTUNG DES STROMVERBRAUCHS
DEVICE FOR MANAGING ELECTRICAL CONSUMPTION

(30) Priorité: 13.03.2014 FR 1452094
(43) Date de publication de la demande: 18.01.2017
(73) Titulaire: Voltalis SA, 75008 Paris (FR)
(72) Inventeur: DELIZY, Florian, F-94120 Fontenay sous Bois (FR); LEFEBVRE DE SAINT GERMAIN, Hugues, F-69110 Sainte Foy les Lyon (FR); OURY, Jean-Marc, F-75007 Paris (FR); HEINTZ, Bruno, F-75015 Paris (FR)
(74) Mandataire: Cabinet Netter
(86) Numéro de dépôt international: PCT/FR2015/050596
(87) Numéro de publication internationale: WO 2015/136216

(56) Documents cités:
- DE-A1- 10 062 109
- KR-Y1- 200 147 308
- US-A1- 2003 117 774
- US-A1- 2007 079 980
- None

## Description

L'invention concerne les dispositifs de gestion de consommation électrique.

Le problème de l'équilibre entre la production et la consommation électrique se pose en permanence en raison des variations de consommation et de l'impossibilité de stocker l'énergie électrique. Cette contrainte exige des acteurs du système électrique de pouvoir disposer de moyens d'ajuster la production et la consommation à tout moment et pas seulement en périodes de pointes de consommation.

Pour répondre à ce problème, la Demanderesse a développé la notion d'effacement diffus, principe qui consiste à agir sur les consommations en interrompant de manière synchronisée et temporaire le fonctionnement de certains appareils électriques sans que les utilisateurs ne le ressentent.

Pour cela, il faut donc des dispositifs qui soient capables de mesurer la consommation instantanée des usages de chaque site, et/ou capables de suspendre l'alimentation sur commande.

La réalisation de tels dispositifs est d'autant plus complexe qu'ils doivent être placés dans des installations électriques de taille restreinte (comme par exemple les tableaux électriques de logements ou de sites tertiaires), ce qui signifie des contraintes très importantes.

Au-delà de ces contraintes de dimensionnement, des contraintes réglementaires se posent. En effet, il n'est pas autorisé d'utiliser des moyens de refroidissement actifs dans ces dispositifs, car une panne de ces moyens risquerait par exemple d'entraîner un incendie, et car les dispositifs sont verrouillés et non accessibles aux utilisateurs afin de les protéger.

Or, le fait de mesurer ou de suspendre le courant nécessite de le dériver à travers des éléments qui vont présenter une certaine impédance. Compte tenu de l'intensité et de la tension enjeu (jusqu'à 20A sur 230V sur 5 voies), la puissance instantanée à dissiper de manière passive est de l'ordre de 100 à 200W, ce qui est extrêmement élevé dans l'espace limité considéré (comme par exemple dans le cas typique des produits intégrés dans un tableau électrique).

Les dispositifs existants sont insatisfaisants : ils sont trop grands, ou ne permettent pas de mesurer et/ou suspendre le courant pour plus d'une ligne. Le document DE 100 62 109 décrit un système comprenant un boîtier, des broches d'alimentation et des broches de signal disposées en forme de U sur les bords, une carte d'alimentation connectée électriquement aux broches d'alimentation et une carte de signal connectée électriquement aux broches de signal.

L'invention vient améliorer la situation.

À cet effet, l'invention propose un dispositif de gestion de consommation électrique selon la revendication 1.

La conception de ce dispositif et l'agencement particulier du circuit imprimé du circuit de traitement permettent de définir un couloir de circulation d'air.

Selon diverses variantes de réalisation, le dispositif peut présenter les caractéristiques suivantes :
- certaines au moins des ouvertures reçoivent certains au moins de la pluralité de connecteurs,
- lorsque les connecteurs reçoivent des lignes de courant électrique, la section libre des ouvertures de l'une des extrémités du boîtier est supérieure ou égale à la section libre des ouvertures de l'autre extrémité du boîtier,
- le circuit de mesure comprend une pluralité de shunts disposés dans le premier espace, chacun relié à une paire de connecteurs respective comprenant un connecteur d'entrée et un connecteur de sortie, et à un dispositif de mesure de l'intensité traversant chaque shunt,
- le circuit de traitement est un circuit de commande agencé pour interrompre sélectivement la fourniture de courant sur une ou plusieurs des lignes électriques reliées aux connecteurs de sortie,
- le circuit de commande comprend une pluralité d'éléments choisis parmi le groupe comprenant des relais, des TRIAC-DIAC et des thyristors, et lesdits éléments sont disposés dans le premier espace, chacun relié à une paire de connecteurs respective comprenant un connecteur d'entrée et un connecteur de sortie,
- le dispositif comprend en outre un circuit d'alimentation disposé dans le deuxième espace,
- le dispositif comprend en outre un circuit pilote disposé dans le deuxième espace,
- le dispositif est capable de gérer une puissance électrique égale à 23kW,
- le dispositif est capable de gérer une puissance électrique de 426W par millimètre de largeur du boîtier, et
- le dispositif est capable de gérer une puissance électrique de 72W par unité de volume en cm³ du boîtier.

D'autres caractéristiques et avantages de l'invention apparaîtront mieux à la lecture de la description qui suit, tirée d'exemples donnés à titre illustratif et non limitatif, tirés des schémas sur lesquels :
- la figure 1 représente une vue schématique de face d'un dispositif selon l'invention lorsqu'il est orienté comme dans un état installé dans un tableau électrique,
- la figure 2 représente une vue schématique selon la flèche II de la figure 1,
- la figure 3 représente une vue schématique selon la flèche III de la figure 1,
- la figure 4 représente une vue schématique selon la flèche IV de la figure 1, et
- la figure 5 représente une vue schématique de l'intérieur du dispositif de la figure 1 selon la flèche V de la figure 4.

Les dessins et la description ci-après contiennent, pour l'essentiel, des éléments de caractère certain. Ils pourront donc servir à mieux faire comprendre la présente invention.

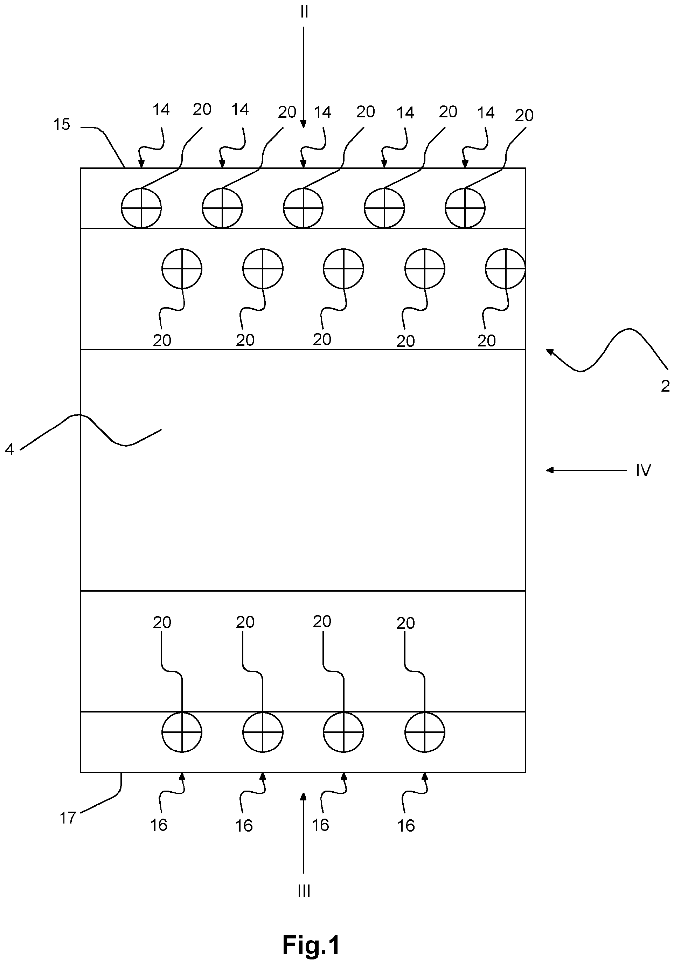

Les figures 1 à 5 représentent plusieurs vues d'un même mode de réalisation de l'invention. Par conséquent, elles seront décrites en parallèle, en faisant référence à chaque figure lorsque cela est nécessaire.

La figure 1 représente un dispositif de gestion de consommation électrique 2 selon l'invention. La figure 1 est une vue schématique de face, tel que le dispositif 2 apparaît lorsqu'il est en place dans un tableau électrique. Dans ce qui suit, des termes relatifs comme « haut » ou « bas », « gauche » ou « droite » sont définis par rapport à cette vue de référence. De même, on pourra parler de largeur et de hauteur par rapport à la figure 1, et de profondeur par rapport à une direction orthogonale au plan de la figure 1.

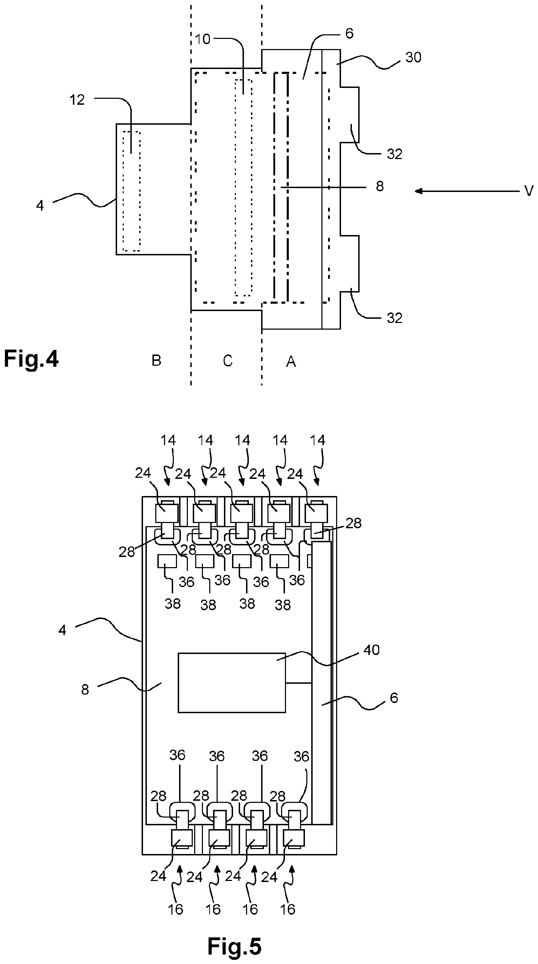

Le dispositif 2 comprend un boîtier 4 qui loge, dans l'exemple décrit ici, un circuit de mesure 6, un circuit de commande 8, un circuit d'alimentation 10 et un circuit pilote 12 (voir figures 4 et 5). Le circuit de mesure 6 et le circuit de commande 8 forment chacun un circuit de traitement.

Le boîtier 4 comprend dans l'exemple décrit ici cinq ouvertures traversantes référencées 14 formées le long d'une extrémité 15 pour recevoir des lignes électriques reliées à la source de courant d'une installation électrique, et quatre ouvertures traversantes référencées 16 formées le long d'une extrémité opposée 17 pour recevoir des lignes électriques dont la gestion de la consommation électrique est recherchée. Il y a donc une ouverture 14 de plus que le nombre d'ouvertures 16. L'ouverture 14 supplémentaire (la plus à gauche sur la figure 1) est utilisée pour alimenter le dispositif 2. Les ouvertures 14 et 16 sont prévues au niveau des extrémités opposées 15 et 17 du boîtier 4, qui définissent respectivement le haut et le bas du boîtier 4 lorsque celui-ci est reçu dans un tableau d'installation électrique basse tension.

Dans l'exemple décrit ici, hormis l'ouverture 14 supplémentaire, les autres ouvertures doivent être considérées par paire, chaque paire concernant une ligne électrique à gérer. Ainsi, sur la figure 1, l'ouverture 14 la plus à droite forme une paire avec l'ouverture 16 la plus à droite, la deuxième ouverture 14 la plus à droite est associée avec la deuxième ouverture 16 la plus à droite, l'ouverture 14 du milieu est associée avec la deuxième ouverture 16 la plus à gauche, et la deuxième ouverture 14 la plus à gauche est associée avec l'ouverture 16 la plus à gauche. Chaque ligne électrique est maintenue en place dans une ouverture 14 ou 16 par un bornier qui sera décrit plus bas et dont une vis de serrage 20 apparaît. Le boîtier 4 présente également quatre ouvertures 22 pour la réception de lignes électriques neutres. En variante, les ouvertures 22 peuvent être omises. En variante, les vis 20 pourraient être remplacées par des clips, ou par tout autre mécanisme de fixation adapté.

D'un point de vue électrique et en ignorant l'ouverture 14 supplémentaire, les ouvertures 14 de l'exemple décrit ici sont des ouvertures d'entrée, tandis que les ouvertures 16 sont des ouvertures de sortie. En variante, certaines ou toutes les ouvertures 14 pourraient être des ouvertures de sortie, et certaines ou toutes les ouvertures 16 pourraient être des ouvertures d'entrée. En outre, les ouvertures 14 et 16 pourraient également être associées d'une manière différente de celle décrite plus haut.

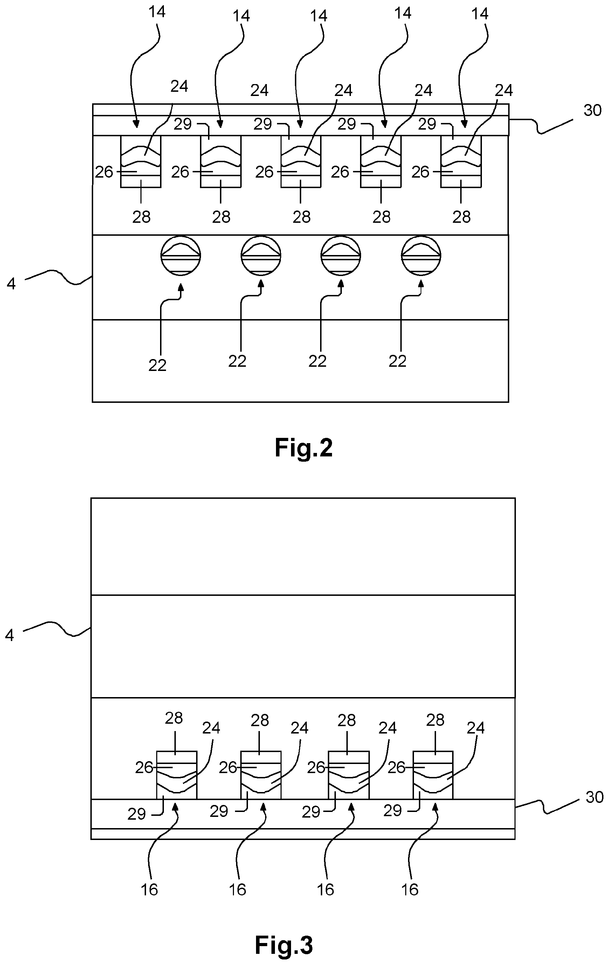

La figure 2 représente une vue du dispositif de la figure 1 selon la flèche II, et peut donc être vue comme une vue de dessus. Elle permet de mieux voir les ouvertures 14 d'entrée ainsi que les ouvertures 22 pour la réception de lignes électriques neutres.

Comme on peut le voir sur cette figure, chaque ouverture 14 reçoit un bornier 24 qui présente un évidement 26 dans lequel est reçu un connecteur 28. Ainsi, une ligne électrique peut être reçue entre le bornier 24 et le connecteur 28, les vis 20 permettant leur couplage. Dans l'exemple décrit ici, les connecteurs 28 ont une forme de lamelle. La forme de chaque bornier est prévue de telle manière que, lorsqu'une ligne électrique est reçue entre le bornier 24 et le connecteur 28, l'ouverture 14 et l'évidement 26 restent au moins partiellement dégagés, de sorte qu'une ouverture traversante 29 est toujours présente entre l'intérieur et l'extérieur du boîtier 4 au niveau de chaque bornier 24.

La figure 3 représente une vue du dispositif de la figure 1 selon la flèche III, et peut donc être vue comme une vue de dessous. Elle permet de mieux voir les ouvertures 16 de sortie.

Comme on peut le voir sur cette figure, chaque ouverture 16 reçoit un bornier 24 qui présente un évidement 26 dans lequel est reçu un connecteur 28. Ainsi, une ligne électrique peut être reçue entre le bornier 24 et le connecteur 28, les vis 20 permettant leur couplage. Dans l'exemple décrit ici, les connecteurs 28 ont une forme de lamelle. La forme de chaque bornier est prévue de telle manière que, lorsqu'une ligne électrique est reçue entre le bornier 24 et le connecteur 28, l'ouverture 16 et l'évidement 26 restent au moins partiellement dégagés, de sorte qu'une ouverture traversante 29 est toujours présente entre l'intérieur et l'extérieur du boîtier 4 au niveau de chaque bornier 24.

Dans l'exemple décrit ici, la section de l'ensemble des ouvertures traversantes 29 des ouvertures 14 (prévues pour être disposées en haut lorsque le dispositif 2 est installé dans un tableau électrique) est sensiblement égale à la section de l'ensemble des ouvertures traversantes 29 des ouvertures 16 (prévues pour être disposées en bas lorsque le dispositif 2 est installé dans un tableau électrique).

En variante, lorsque les connecteurs reçoivent des lignes électriques, la section libre des ouvertures de l'extrémité du boîtier 4 prévue pour être disposée en haut lorsque le dispositif 2 est installé dans un tableau électrique est supérieure à la section libre des ouvertures de l'extrémité opposée du boîtier 4.

Il apparaît donc que c'est la surface libre après réception des lignes électriques qui importe. Le nombre d'ouvertures 14 ou 16 n'est pas prépondérant. Par ailleurs, les connecteurs 28 pourraient être reçus de manière à fermer le boîtier 4, tant que des ouvertures 14 et 16 le long des extrémités 15 et 17 pour permettre la circulation d'air sont prévues.

La figure 4 représente une vue du dispositif de la figure 1 selon la flèche IV, et peut donc être vue comme une vue de côté. Elle permet de mieux voir la forme du boîtier 4, ainsi que le circuit de mesure 6, le circuit de commande 8, le circuit d'alimentation 10 et le circuit pilote 12 qui sont représentés en pointillés (par transparence).

Comme on peut le voir sur cette figure, le boîtier 4 présente trois portions distinctes dans le sens de la profondeur, qui apparaissent également sur les figures 1 à 3. La première portion référencée A présente la plus faible profondeur et reçoit les ouvertures 14 et 16. La deuxième portion référencée B présente la profondeur la plus importante et reçoit le circuit pilote 12. Enfin, la troisième portion référencée C est disposée entre la première portion référencée A et la deuxième portion référencée B, et reçoit le circuit d'alimentation 10 ainsi que les ouvertures 22.

Le circuit de mesure 6 est reçu pour partie dans la première portion référencée A qui présente la plus faible profondeur, et pour partie dans la troisième portion référencée C. Le circuit de commande 8 est disposé sensiblement perpendiculairement au circuit de mesure 6, et est reçu dans la première portion référencée A.

La première portion référencée A présente une hauteur légèrement plus importante que la troisième portion référencée C. Cela fournit un accès aux vis 20 de serrage des connecteurs 28 et les borniers 24. La deuxième portion référencée B est la portion qui présente la plus faible hauteur car elle est contrainte par l'installation dans un tableau électrique.

En effet, une fois le dispositif 2 installé dans un tableau électrique, un utilisateur ne voit que la partie qui correspond à la paroi de la deuxième portion référencée B la plus à gauche sur la figure 4. Cependant, du point de vue thermique, les portions B et C peuvent être vues comme un seul espace, qui s'étend jusqu'au circuit de commande 8. Comme on le verra plus bas, le circuit de commande 8 délimite deux espaces dans le boîtier 4, respectivement de part et d'autre du circuit de commande 8.

Comme on peut le voir sur cette figure, le boîtier 4 présente un couvercle 30. Le couvercle 30 présente deux portions 32 en saillie selon la direction de la flèche V présentant des moyens d'attache à un tableau électrique.

La figure 5 représente une vue de l'intérieur du dispositif de la figure 1 selon la flèche V de la figure 4. Les connecteurs 28 sont reliés au circuit de mesure 6 par le biais de soudures 36 et de shunts 38 qui sont reçus sur le circuit de commande 8. Les quatre soudures 36 qui correspondent aux lignes électriques que l'on souhaite gérer (c'est-à-dire toutes sauf la ligne électrique destinée à l'alimentation du dispositif 2) sont chacune reliées à un des shunts 38. Les shunts 38 permettent de mesurer l'intensité traversant chaque ligne électrique. Une mesure en parallèle de la tension d'alimentation, par exemple sur la ligne électrique destinée à l'alimentation du dispositif 2 permet ainsi de récupérer la puissance électrique consommée sur chacune des lignes électriques gérées. Les shunts 38 constituent des éléments électroniques capables de faire passer un courant de 5A et qui dissipent une quantité importante de chaleur, de l'ordre de 8W par shunt.

La figure 5 montre également un bloc 40 relié au circuit de commande 8. Le bloc 40 comprend une pluralité de relais qui sont chacun reliés à l'un des connecteurs 28 des ouvertures 16 de sortie, et permettent de suspendre sélectivement et individuellement l'alimentation des lignes électriques. Lors d'une commutation, les relais du bloc 40 sont également susceptibles de dissiper une quantité importante de chaleur. En variante, les relais du bloc 40 pourraient être remplacés par des TRIAC-DIAC, des thyristors ou d'autres éléments électroniques pour commander le courant. En variante, le bloc 40 peut être agencé pour suspendre ou commander l'alimentation de toutes les lignes électriques de manière simultanée, et peut comprendre un unique relais, TRIAC-DIAC ou thyristor.

Il apparaît donc que le circuit de commande 8 comprend un circuit imprimé qui divise le boîtier 4 en deux espaces. Le premier espace, comme on l'a expliqué plus haut, comprend les ouvertures 14 et 16, loge les connecteurs 28, les shunts 38, ainsi que le bloc 40. Ainsi, tous les éléments qui dégagent le plus de chaleur sont agencés dans le premier espace, et parmi ceux-ci les éléments qui dégagent le plus de chaleur, c'est-à-dire les shunts 38, sont disposés dans la partie supérieure du premier espace lorsque le dispositif 2 est mis en place dans une installation électrique.

En d'autres termes, les éléments qui dégagent le plus de chaleur sont disposés à proximité des connecteurs 28 reçus dans les ouvertures 14, c'est-à-dire à proximité de l'extrémité qui définit le haut du boîtier 4 lorsque celui-ci est reçu dans un tableau d'installation électrique basse tension. Le circuit de mesure 6 et/ou le circuit de commande 8 sont reçus entre les extrémités du boîtier 4 qui reçoivent les connecteurs 28 et qui définissent respectivement le haut et le bas du boîtier 4 lorsque celui-ci est reçu dans un tableau d'installation électrique basse tension.

Dans l'exemple décrit ici, les éléments du dispositif 2 qui dégagent le moins de chaleur sont reçus dans le deuxième espace. En variante, certains au moins des éléments qui dégagent le moins de chaleur pourraient également être reçus dans le premier espace. Comme, les ouvertures 14 et 16 restent ouvertes, même lorsqu'elles reçoivent des lignes électriques en entrée et en sortie, et comme le premier espace reçoit tous les éléments du dispositif 2 qui dégagent le plus de chaleur, l'agencement du dispositif 2 permet de créer un courant d'air dans le premier espace.

Cet agencement permet de refroidir passivement le dispositif 2 malgré l'important dégagement de chaleur des éléments conducteurs de puissance qu'il renferme.

Les éléments électriques ou électroniques conducteurs de puissance qui sont susceptibles de dégager le plus de chaleur du fait du courant qui les traverse pourront être désignés par l'expression « élément chaud ». Par exemple, les shunts peuvent être chacun soumis à un courant d'une puissance moyenne de 4,6kW, ce qui nécessite une grande capacité de dissipation thermique. Cela représente donc jusqu'à 23kW de puissance à gérer.

À l'inverse, par élément froid, on entend les éléments conducteurs de puissance qui sont susceptibles à dégager le moins de chaleur, comme par exemple le microcontrôleur du circuit pilote 12. Les termes « élément chaud » et « élément froid », bien que de nature relative, trouvent donc un sens technique précis dans le cadre de l'invention.

Les éléments chauds du circuit de mesure 6 et du circuit de commande 8 se trouvent dans le premier espace, tandis que les éléments froids sont situés dans le deuxième espace. Dans le cas du circuit de commande 8 dont le circuit imprimé sert de paroi séparatrice entre le premier espace et le deuxième espace, cela est réalisé en soudant les éléments chauds et les éléments froids de part et d'autre du circuit imprimé. Dans le cas du circuit de mesure 6, qui est agencé orthogonalement par rapport au plan du circuit imprimé du circuit de commande 8, il suffit de souder les éléments chauds et froids de part et d'autre de ce dernier. Cet agencement « à 90° » permet de limiter au maximum l'encombrement du dispositif 2 et donc de contribuer à la gestion de quatre ou cinq lignes électriques dans un encombrement de 3U, soit environ 54mm, pour un volume de 320cm³.

Dans l'exemple décrit ici, le dispositif 2 comprend deux circuits de traitement, à savoir le circuit de mesure 6 et le circuit de commande 8. En variante, le dispositif 2 pourrait comprendre un unique circuit de traitement, c'est-à-dire le circuit de mesure 6 ou le circuit de commande 8 uniquement, ou un autre circuit de traitement. De même, le circuit d'alimentation 10 et le circuit pilote 12 pourraient être omis en variante, et certaines ou la totalité de leurs fonctions mises en œuvre directement sur le circuit de traitement. La cinquième ligne utilisée pour l'alimentation du dispositif 2 pourrait être omise ou être une ligne électrique gérée comme les quatre autre lignes électriques, le dispositif 2 gérant alors cinq lignes électriques.

Dans l'exemple décrit ici, le circuit pilote 12 comprend une unité de communication radio ou CPL avec un boîtier déporté de commande de l'effacement diffus. Ainsi, le circuit pilote 12 reçoit les données brutes du circuit de mesure 6 pour en tirer la consommation instantanée sur chaque ligne électrique reliée au dispositif 2. En outre, il peut recevoir des données du boîtier de commande d'effacement diffus pour commander le circuit de commande 8 afin de suspendre ou de moduler le courant sur une ou plusieurs des lignes électriques reliées au dispositif 2. Enfin, le circuit pilote 12 peut également embarquer de l'intelligence, afin de suspendre ou de moduler le courant sur une ou plusieurs des lignes électriques reliées au dispositif 2 sur la base de fonctions locales, sans appel au boîtier de commande d'effacement diffus. En variante, le circuit pilote 12 peut être agencé pour réaliser d'autres fonctions, comme discuter avec un système domotique, ou un quelconque autre système dans lequel la gestion de l'alimentation des appareils électriques est utile.

Il convient de noter que la présente invention trouve particulièrement son application dans la gestion de consommation électrique d'installations de basse tension, c'est-à-dire présentant une tension de l'ordre de 230V (ou 110V) et jusqu'à 1000V, et des intensités de plus de 5A par ligne, l'intensité étant de l'ordre de 20A par ligne dans l'exemple décrit. Les installations de puissance haute tension (>1000V) ou très basse tension (<100V) ne présentent pas les mêmes défis en termes de combinaison de volume disponible pour loger le dispositif et de puissance à dissiper.

## Revendications

1. Dispositif de gestion de consommation électrique, comprenant
- une pluralité de connecteurs (28) capables de recevoir chacun une liaison à une ligne de courant électrique, propres à former des connecteurs d'entrée et des connecteurs de sortie,
- un circuit de traitement (6, 8) pour gérer la consommation électrique sur les lignes de courant électrique auquel il est connecté, relié à au moins un des connecteurs (28) d'entrée et à au moins un des connecteurs (28) de sortie, et comprenant un circuit imprimé qui reçoit des composants électroniques (38),
- un boîtier (4) pouvant être installé dans un tableau d'installation électrique basse tension, présentant deux extrémités opposées (15, 17) et au moins deux ouvertures (14, 16) le long de chaque extrémité (15, 17), et logeant d'une part la pluralité de connecteurs (28) le long desdites extrémités opposées (15, 17) du boîtier (4), et d'autre part le circuit de traitement (6,8) entre lesdites extrémités opposées (15, 17), certaines au moins desdites ouvertures (14, 16) restant partiellement libres lorsque les connecteurs (28) reçoivent une ligne électrique,
et **caractérisé en ce que** le circuit imprimé du circuit de traitement (6, 8) est disposé dans le boîtier de manière à définir un premier espace et un deuxième espace séparés, les composants électroniques (38) capables de conduire des courants d'au moins 5A étant reçus sur le circuit imprimé de sorte qu'ils sont logés dans le premier espace avec la pluralité de connecteurs (28), sensiblement au niveau de l'une desdites extrémités opposées du boîtier (4), le circuit de traitement (6, 8) comprenant un circuit de mesure (6) agencé pour déterminer une consommation électrique instantanée sur une ou plusieurs lignes électriques reliées aux connecteurs de sortie (28) et un circuit de commande (8) agencé pour interrompre sélectivement la fourniture de courant sur une ou plusieurs des lignes électriques reliées aux connecteurs de sortie (28), le circuit imprimé déterminant les premier et deuxième espaces étant le circuit imprimé du circuit de commande (8), et le circuit imprimé du circuit de mesure (6) s'étendant sensiblement orthogonalement par rapport au circuit imprimé du circuit de commande (8), de sorte que les conducteurs de puissance susceptibles de dégager le plus de chaleur du circuit de mesure (6) et du circuit de commande (8) sont logés dans le premier espace.

2. Dispositif selon la revendication 1, dans lequel certaines au moins des ouvertures (14, 16) reçoivent certains au moins de la pluralité de connecteurs (28).

3. Dispositif selon la revendication 1 ou 2, dans lequel, lorsque les connecteurs (28) reçoivent des lignes de courant électrique, la section libre des ouvertures (14) de l'une des extrémités (15) du boîtier (4) est supérieure ou égale à la section libre des ouvertures (16) de l'autre extrémité (17) du boîtier (4).

4. Dispositif selon l'une des revendications précédentes, dans lequel le circuit de mesure (6) comprend une pluralité de shunts (38) disposés dans le premier espace, chacun relié à une paire de connecteurs respective comprenant un connecteur d'entrée (28) et un connecteur de sortie (28), et à un dispositif de mesure de l'intensité traversant chaque shunt (38).

5. Dispositif selon l'une des revendications précédentes, dans lequel le circuit de commande (8) comprend une pluralité d'éléments choisis parmi le groupe comprenant des relais (40), des TRIAC-DIAC et des thyristors, et dans lequel lesdits éléments sont disposés dans le premier espace, chacun relié à une paire de connecteurs respective comprenant un connecteur d'entrée et un connecteur de sortie (28).

6. Dispositif selon l'une des revendications précédentes, comprenant en outre un circuit d'alimentation (10) disposé dans le deuxième espace.

7. Dispositif selon l'une des revendications précédentes, comprenant en outre un circuit pilote (12) disposé dans le deuxième espace.

8. Dispositif selon l'une des revendications précédentes, **caractérisé en ce qu'**il est capable de gérer une puissance électrique égale à 23kW.

9. Dispositif selon l'une des revendications précédentes, **caractérisé en ce qu'**il est capable de gérer une puissance électrique de 426W par millimètre de largeur du boîtier (4).

10. Dispositif selon l'une des revendications précédentes, **caractérisé en ce qu'**il est capable de gérer une puissance électrique de 72W par unité de volume en cm³ du boîtier (4).

## Patentansprüche

1. Vorrichtung zur Verwaltung des Stromverbrauchs, umfassend
- eine Vielzahl von Verbindern (28), in der Lage, jeweils eine Bindung mit einer elektrischen Stromleitung aufzunehmen, fähig, Eingangsverbinder und Ausgangsverbinder zu bilden,
- eine Verarbeitungsschaltung (6, 8) zum Verwalten des Stromverbrauchs auf den Leitungen mit elektrischem Strom, mit dem sie verbunden ist, gebunden an wenigstens einen der Eingangsverbinder (28) und wenigstens einen der Ausgangsverbinder (28) und umfassend eine Leiterplatte, die elektronische Komponenten (38) aufnimmt,
- ein Gehäuse (4), welches in einem Elektroinstallationspanel mit Niederspannung installiert werden kann, zwei gegenüberliegende Extremitäten (15, 17) aufweisend und wenigstens zwei Öffnungen (14, 16) entlang jeder Extremität (15, 17) und einerseits die Vielzahl von Verbindern (28) entlang der gegenüberliegenden Extremitäten (15, 17) des Gehäuses (4) unterbringend, und andererseits die Verarbeitungsschaltung (6, 8) zwischen den gegenüberliegenden Extremitäten (15, 17), wobei einige wenigstens der Öffnungen (14, 16) teilweise frei bleiben, wenn die Verbinder (28) eine elektrische Leitung aufnehmen,
und **dadurch gekennzeichnet, dass** die Leiterplatte der Verarbeitungsschaltung (6, 8) solcherart in dem Gehäuse bereitgestellt ist, dass sie einen ersten Raum und einen zweiten Raum, voneinander getrennt, definiert, wobei die elektrischen Komponenten (38), in der Lage, Stromstärken von wenigstens 5A zu leiten, solcherart auf der Leiterplatte aufgenommen werden, dass sie in dem ersten Raum mit der Vielzahl von Verbindern (28) untergebracht sind, im Wesentlichen auf der Ebene der einen der dem Gehäuse (4) gegenüberliegenden Extremitäten, wobei die Verarbeitungsschaltung (6, 8) eine Messschaltung (6) umfasst, dafür ausgelegt, einen momentanen Stromverbrauch auf einer oder mehreren mit den Ausgangsverbindern (28) verbundenen elektrischen Leitungen, zu bestimmen, und eine Steuerschaltung (8), dafür ausgelegt, die Stromzufuhr auf einer oder mehreren der mit den Ausgangsverbindern (28) verbundenen elektrischen Leitungen selektiv zu unterbrechen, wobei die den ersten und den zweiten Raum bestimmende Leiterplatte die Leiterplatte der Steuerschaltung (8) ist, und wobei sich die Leiterplatte der Messschaltung (6) im Wesentlichen in Bezug auf die Leiterplatte der Steuerschaltung (8) solcherart orthogonal erstrecken, dass die Stromleitungen, die die meiste Wärme der Messschaltung (6) und der Steuerschaltung (8) abgeben könnten, in dem ersten Raum untergebracht sind.

2. Vorrichtung nach Anspruch 1, in welcher wenigstens einige der Öffnungen (14, 16) wenigstens einige aus der Vielzahl von Verbindern (28) aufnehmen.

3. Vorrichtung nach Anspruch 1 oder 2, in welcher wenn die Verbinder (28) elektrische Stromleitungen aufnehmen, die freie Auswahl der Öffnungen (14) einer der Öffnungen (15) des Gehäuses (4) größer oder gleich der freien Sektion der Öffnungen (16) der anderen Extremität (17) des Gehäuses (4) ist.

4. Vorrichtung nach einem der vorhergehenden Ansprüche, in welcher die Messschaltung (6) eine Vielzahl von Shunts (38) umfasst, bereitgestellt in dem ersten Raum, jeweils an ein Paar von Verbindern gebunden, jeweils einen Eingangsverbinder (28) und einen Ausgangsverbinder (28) umfassend, und an eine Intensitätsmessvorrichtung, die jeden Shunt (38) durchquert.

5. Vorrichtung nach einem der vorhergehenden Ansprüche, in welcher die Steuerschaltung (8) eine Vielzahl von Elementen umfasst ausgewählt aus der Gruppe umfassend Relais (40), TRIAC-DIAC und Thyristoren, und in welchem die Elemente in dem ersten Raum bereitgestellt sind, wobei jedes an ein Paar Verbinder gebunden ist, jeweils einen Eingangsverbinder und einen Ausgangsverbinder (28) umfassend.

6. Vorrichtung nach einem der vorhergehenden Ansprüche, weiter umfassend eine Versorgungsschaltung (10), bereitgestellt in dem zweiten Raum.

7. Vorrichtung nach einem der vorhergehenden Ansprüche, weiter umfassend eine Steuerschaltung (12), bereitgestellt in dem zweiten Raum.

8. Vorrichtung nach einem der vorhergehenden Ansprüche, **dadurch gekennzeichnet, dass** sie in der Lage ist, eine elektrische Leistung gleich 23 kW zu erzeugen.

9. Vorrichtung nach einem der vorhergehenden Ansprüche, **dadurch gekennzeichnet, dass** sie in der Lage ist, eine elektrische Leistung gleich 426 W pro Millimeter Breite des Gehäuses (4) zu erzeugen.

10. Vorrichtung nach einem der vorhergehenden Ansprüche, **dadurch gekennzeichnet, dass** sie in der Lage ist, eine elektrische Leistung von 72 W pro Volumeneinheit in cm³ des Gehäuses (4) zu erzeugen.

## Claims

1. A device for managing electrical consumption, comprising:
- a plurality of connectors (28) capable of each receiving a link to an electrical current line and suitable for forming input connectors and output connectors,
- a processing circuit (6, 8) for managing the electrical consumption on the electrical current lines, to which it is connected, linked to at least one of the input connectors (28) and to at least one of the output connectors (28), and comprising a printed circuit which receives electronic components (38),
- a box (4) being able to be installed in a low-voltage electrical distribution board, exhibiting two opposite ends (15, 17) and at least one opening (14, 16) along each end (15, 17), and housing on the one hand the plurality of connectors (28) along said opposite ends (15, 17) of the box (4), and on the other hand the processing circuit (6, 8) between said opposite ends (15, 17), at least some of said openings (14, 16) remaining partially free when the connectors (28) receive an electrical line,
**characterized**
**in that** the printed circuit of the processing circuit (6, 8) is disposed in the box so as to define a first separate space and a second separate space, the electronic components (38) capable of conducting currents of at least 5A being received on the printed circuit so that they are housed in the first space with the plurality of connectors (28), substantially in proximity to one of said opposite ends of the box (4), the processing circuit (6) comprising a measurement circuit (6) designed to determine an instantaneous electrical consumption on one or more electrical lines linked to the output connectors (28) and a control circuit (8) designed to selectively interrupt the provision of current on one or more of the electrical lines linked to the output connectors (28), the printed circuit determining the first and second spaces being the printed circuit of the control circuit (8), and in which the printed circuit of the measurement circuit (6) extends substantially orthogonally with respect to the printed circuit of the control circuit (8), so that the power conductors liable to liberate the most heat of the measurement circuit (6) and of the control circuit (8) are housed in the first space.

2. The device as claimed in claim 1, in which at least some of the openings (14, 16) receive at least some of the plurality of connectors (28).

3. The device as claimed in claim 1 or 2, in which, when the connectors (28) receive electrical current lines, the free cross-section of the openings (14) of one of the ends (15) of the box (4) is greater than or equal to the free cross-section of the openings (16) of the other end (17) of the box (4).

4. The device as claimed in one of the preceding claims, in which the measurement circuit (6) comprises a plurality of shunts (38) disposed in the first space, each linked to a respective pair of connectors comprising an input connector (28) and an output connector (28), and to a device for measuring the current passing through each shunt (38).

5. The device as claimed in one of the preceding claims, in which the control circuit (8) comprises a plurality of elements chosen from among the group comprising relays (40), TRIACs-DIACs and thyristors, and in which said elements are disposed in the first space, each linked to a respective pair of connectors comprising an input connector and an output connector (28).

6. The device as claimed in one of the preceding claims, furthermore comprising a supply circuit (10) disposed in the second space.

7. The device as claimed in one of the preceding claims, furthermore comprising a pilot circuit (12) disposed in the second space.

8. The device as claimed in one of the preceding claims, **characterized in that** it is capable of managing an electrical power equal to 23kW.

9. The device as claimed in one of the preceding claims, **characterized in that** it is capable of managing an electrical power of 426W per millimeter of width of the box (4).

10. The device as claimed in one of the preceding claims, **characterized in that** it is capable of managing an electrical power of 72W per unit volume in cm³ of the box (4).
